# EUROPÄISCHE PATENTSCHRIFT

(11) **EP 2 291 234 B1**
(45) Veröffentlichungstag und Bekanntmachung des Hinweises auf die Patenterteilung: **01.05.2019**
(21) Anmeldenummer: 09768872.5
(22) Anmeldetag: 13.05.2009
(51) Int. Cl.: B01J 19/00, B01F 15/04, G01G 19/30, G01G 21/23

(54) **LABORREAKTOR MIT EINEM REAKTIONSGEFÄSS**
LABORATORY REACTOR WITH A REACTION VESSEL
RÉACTEUR DE LABORATOIRE COMPORTANT UN RÉCIPIENT DE RÉACTION

(30) Priorität: 24.06.2008 DE 102008029900
(43) Veröffentlichungstag der Anmeldung: 09.03.2011
(73) Patentinhaber: IKA - Werke GmbH & Co. KG, 79219 Staufen (DE)
(72) Erfinder: ZELLER, Andreas, 79189 Bad Krozingen (DE); EBLE, Erhard, 79189 Bad Krozingen (DE)
(74) Vertreter: Kunst, Manuel Nikolaus Johannes
(86) Internationale Anmeldenummer: PCT/EP2009/003383
(87) Internationale Veröffentlichungsnummer: WO 2009/156023

(56) Entgegenhaltungen:
- EP-A- 0 995 813
- DE-A1- 3 228 714
- US-A- 4 910 024
- US-A- 5 402 834
- US-A1- 2007 211 566

## Beschreibung

Die Erfindung betrifft einen Laborreaktor mit einem abgeschlossenen Reaktionsgefäß zur Aufnahme von zu bearbeitenden und/oder zu mischenden und/oder miteinander reagierenden Stoffen und mit wenigstens einem in dieses Gefäß eingreifenden Bearbeitungs- und/oder Messaggregat oder Misch- und/oder Rührgerät sowie mit einer das Reaktionsgefäß aufnehmenden Halterung, welche eine eine Aufstellfläche zugewandte Unterseite hat sowie mit einer mit dem Reaktionsgefäß verbundenen Einrichtung zur Änderung des Drucks, insbesondere mit einer Einrichtung zur Erzeugung eines Überdrucks oder eines Unterdrucks.

Derartige Laborreaktoren sind in vielfältiger Form und unterschiedlicher Bauweise bekannt. Häufig sind sie modular aufgebaut und dienen zur Optimierung und Reproduzierung chemischer Reaktions-, Misch-, Dispergier- und/oder Homogenisierungsprozesse im Labormaßstab. Beispielsweise können damit folgende Prozesse durchgeführt werden:
Herstellen von Cremes, Lotionen, Emulsionen, Liposom-Zubereitungen aus dem pharmazeutischen und kosmetischen Bereich,
Einarbeiten von Feststoffen wie Kalziumcarbonat, Talkum, Titandioxid und andere Substanzen in flüssige Polymere,
Einarbeiten von Additiven und festen polymeren Verbindungen in Mineralöle,
Malen und Zerfasern von Feststoffen und Fasern in Flüssigkeiten und Polymeren.

Derartige Laborreaktoren können vom Anwender häufig an die jeweilige Aufgabenstellung angepasst werden. Dabei können zum Beispiel Temperaturmessgeräte, Rührwerke, Dispergiergeräte und/oder Thermostate eingesetzt und auch in unterschiedlicher Weise, auch mittels Computer und/oder Mikroprozessor programmgesteuert werden. Dabei können ein- und doppelwandige Gefäße mit oder Bodenauslass aus speziellem Glas oder Edelstahl eingesetzt werden, wobei zur Grundausstattung in der Regel ein Stativsystem zur Halterung einerseits des Gefäßes und andererseits der einzusetzenden Apparate, Geräte und Messgeräte gehört. Die Halterung für die Geräte ist in vielen Fällen so ausgebildet, dass die Bearbeitungs- und Messgeräte oberhalb des Gefäßes befestigt werden können, so dass sie von oben her in das Gefäß eingreifen können.

Aus der EP 0 995 813 A2 ist ein Verfahren und eine Vorrichtung anderer Gattung bekannt, mit der eine chemische Einschleusung oder Bedampfung oder Beschichtung durch chemische Abscheidung durchgeführt werden soll, wobei ein entsprechender Ofen auf Kraftdosen aufgesetzt ist, um dabei das Gewicht oder Gewichtsänderungen während des Prozesses erkennen zu können. Dabei ist jedoch eine Einrichtung zur Änderung des Druckes nicht vorgesehen oder von Bedeutung.

Daneben sind Laborreaktoren der eingangs definierte Art bekannt, bei denen eine Antriebswelle für eine Mischeinrichtung durch den Boden des Gefäßes hindurchgeführt ist.

Eine Vorrichtung zum Mischen insbesondere von Laborgefäß-Inhalten mit einem Aufnahmeadapter mit einer Halterung zum Aufnehmen von Gefäßen, insbesondere von Laborgefäßen in Wechselblöcken und einem Antrieb, ist aus der DE 10 2006 011 370 A1 bekannt.

Bei derartigen Laborreaktoren kommt es bei der Bearbeitung von Stoffen häufig auf sehr genaue, sich aber auch während der Bearbeitung gegebenenfalls ändernde Mengen an, die sowohl nacheinander als auch gleichzeitig einzufüllen sind oder die sich während der Bearbeitung hinsichtlich ihres Gewichts oder durch chemische Reaktionen ändern können, wenn beispielsweise eine Heizfunktion vorhanden ist.

Um das Auffüllen oder Nachfüllen oder das im Laufe eines Prozesses allmähliche Zuführen weiterer Stoffe zu ermöglichen, muss bisher dafür gesorgt werden, dass solche Stoffe in der genau richtigen Menge zugeführt werden, also jeweils zuvor abgemessen werden. Dies ist als aufwendig und umständlich anzusehen.

Es besteht deshalb die Aufgabe, einen Laborreaktor der eingangs definierten Art zu schaffen, mit welchem das Füllen, Auffüllen und/oder Nachfüllen in kontrollierter Weise einfach durchführbar ist.

Zur Lösung dieser Aufgabe ist der eingangs definierte Laborreaktor dadurch gekennzeichnet, dass an der Unterseite der Halterung mehrere Aufstellfüße in Gebrauchsstellung aufwärts oder in vertikaler Richtung gegen eine Rückstell- oder Federkraft nachgiebig oder verstellbar oder beweglich gelagert und mit einer Wiegeeinrichtung versehen oder verbunden oder in Wirkverbindung ist, dass die nachgiebigen oder verstellbaren oder beweglichen Aufstellfüße Hebel oder Wippen oder Endstücke beaufschlagen, die mit Wiegeeinrichtung zusammenwirken oder in Wirkverbindung oder verbunden sind, und dass die durch die Aufstellfüße bewegbaren Hebel oder Wippen oder Endstücke mit Kraftmesssensoren oder Messstreifen oder Piezoelementen als Bestandteile einer Wiegeeinrichtung versehen sind.

Dadurch ist es möglich, während der Bearbeitung von Stoffen Änderungen der zu bearbeitenden Menge, beispielsweise durch Verdunstung, festzustellen und nachträglich einzuführende weitere Stoffe oder Produkte gewichtsmäßig oder mengenmäßig korrekt beizumischen, ohne dass die hinzuzufügenden Bestandteile separat dosiert werden müssen. Darüber hinaus ist auch eine gegebenenfalls ständige Kontrolle des Gewichts der bearbeiteten Stoffmischung möglich. Ferner kann eine sehr genaue Dosierung einzelner Mischbestandteile bei deren Einfüllen in ein schon installiertes Reaktionsgefäß erfolgen. Dabei kann eine entsprechende Wiegefunktion auf engstem Raum verwirklicht werden. Ferner stellt es eine konstruktiv einfache Möglichkeit dar, die Beweglichkeit der Aufstellfüße an einer Wäge- oder Wiegeeinrichtung wirksam zu machen.

Bei einer vorteilhaften Ausführungsform können die Aufstellfüße wenigstens teilweise aus federelastisch nachgiebigem Werkstoff bestehen und mit einem mit der Wiegeeinrichtung verbundenen, durch die Nachgiebigkeit des oder der Aufstellfüße bewegbaren Übertragungselement zu der Wiegeeinrichtung versehen sein.

Die Nachgiebigkeit oder die bewegliche Lagerung der Aufstellfüße ergibt ein besonders präzises Abwiegen von Mischungen oder Mischungsbestandteilen.

Eine weitere Abwandlung kann vorsehen, dass zwei Aufstellfüße oder mehrere oder alle Aufstellfüße untereinander mechanisch verbunden sind. Auch dadurch kann eine entsprechende Wiegeeinrichtung beaufschlagt oder angesteuert werden.

Die Verbindung zweier Aufstellfüße kann zwischen diesen einen Abstand zur Aufstellfläche haben oder wenigstens zwei Aufstellfüße können einstückig zu einem breiten Aufstellfuß vereinigt oder verbunden sein, der eine gemeinsame oder zwei Wiegeeinrichtungen aufweist oder beaufschlagt. Dadurch kann die Standfestigkeit des Laborreaktors verbessert und dennoch die Wiegefunktion erreicht werden. Im Hinblick auf gängige Laborreaktoren mit mehreren einzelnen Aufstellfüßen ist jedoch die Ausführungsform bevorzugt, bei welcher diese einzelnen mehreren Aufstellfüße jeweils mit der oder einer Wiegemesseinrichtung beispielsweise über entsprechende Sensoren zusammenwirken, so dass auch bestehende Laborreaktoren weitgehend unverändert bleiben können, aber die entsprechend beweglichen oder nachgiebigen Aufstellfüße mit Wiegefunktion erhalten können.

Zweckmäßig ist es, wenn die Kraftmesssensoren mehrerer oder aller Aufstellfüße mit einem Mikroprozessor oder Rechner in der Weise kombiniert sind, dass die an den einzelnen Aufstellfüßen aufgenommenen Gewichtskräfte addiert und/oder gemittelt werden. Somit erhält der Benutzer von vorneherein jeweils eine Gewichtsangabe beziehungsweise ein Gesamtgewicht oder dessen Änderung kann in geeigneter Weise angezeigt oder einem Steuergerät zugeführt werden, welches auf eine Gewichtsänderung reagieren kann.

Eine Ausgestaltung des erfindungsgemäßen Laborreaktors kann vorsehen, dass er einen elektronischen Speicher für Rezepturen aufweist, in welchem stoffmäßig und gewichtsmäßig definierte Einzelbestandteile von Mischungen hinterlegt sind und durch die integrierte Wiegefunktion menügeführt abarbeitbar sind. Somit können immer wiederkehrende Bearbeitungs- oder Mischvorgänge erheblich rationalisiert und beschleunigt werden.

Eine weitere Ausgestaltung kann vorsehen, dass eine Bedienungs-, Steuerungs- und/oder Speichereinheit vorgesehen und lösbar mit dem Laborreaktor oder einem Gehäuse verbunden und mit den in dem Laborreaktor oder Gehäuse befindlichen Antriebsteilen, mit der Wiegeeinrichtung und/oder mit weiteren Aggregaten über Funk oder über ein Kabel verbunden ist. Somit kann der Benutzer den Laborreaktor auch in größerem Abstand bedienen beziehungsweise die verschiedenen Anzeigen ablesen, was zum Beispiel dann vorteilhaft ist, wenn der Laborreaktor unter einer Schutzhaube beispielsweise in einem Abzug betätigt werden soll und der Benutzer dennoch auch Bedienungsfunktionen ausführen möchte.

Das Rühr- und/oder Mischgerät oder Bearbeitungsaggregat des Laborreaktors kann eine Drehmomentenerkennung aufweisen, die insbesondere über die Stromaufnahme des Antriebsmotors erfolgen kann. Gegebenenfalls kann auch bei Vorhandensein eines Drehzahlreglers dessen Stellgröße zur Ermittlung des Drehmoments herangezogen werden. Ändert sich das Drehmoment aufgrund einer Viskoseänderung, kann dies gegebenenfalls Anlass sein, einen oder mehrere Stoffe hinzuzufügen, wobei wichtig sein kann, dass dies mit einem vorgegebenen Gewicht erfolgt, welches über die Aufstellfüße und die Wiegeeinrichtung auf einfache Weise möglich ist.

Die Einrichtung zur Änderung des Drucks, also zur Erzeugung eines Überdrucks oder bevorzugt eines Unterdrucks in dem entsprechend dicht abgeschlossenen Reaktionsgefäß kann ein an den Laborreaktor oder das Reaktorgefäß anschließbare oder angeschlossene Pumpe, zum Beispiel eine Vakuumpumpe, sein. Zu dem Laborreaktor kann also diese Einrichtung zur Änderung des Drucks dazugehören unabhängig davon, ob diese Einrichtung unmittelbar Teil des Laborreaktors oder aber ein eigenständiges angeschlossenes Gerät ist. Dies kann bei einer weiteren Bearbeitung von Stoffen oder Substanzen in dem Laborreaktor zu Gewichtsveränderungen führen, die über die erfindungsgemäße Wiegeeinrichtung erkannt und gegebenenfalls korrigiert werden kann.

Vor allem bei Kombination einzelner oder mehrerer der vorbeschriebenen Merkmale und Maßnahmen ergibt sich ein Laborreaktor, bei welchem das Gewicht des zu bearbeitenden oder reagierenden Gutes und eine eventuelle Gewichtsänderung, sei es während der Bearbeitung, sei es durch Hinzufügen weiterer Bestandteile, sofort erkannt und erfasst und erforderlichenfalls korrigiert oder ausgewertet werden kann.

Nachstehend ist ein Ausführungsbeispiel der Erfindung anhand der Zeichnung näher beschrieben. Es zeigt in zum Teil schematisierter Darstellung:
- Fig. 1: eine perspektivische Ansicht eines erfindungsgemäßen Laborreaktors mit einem Reaktionsgefäß und einer Befestigungsstange für die Anbringung von Bearbeitungsund/oder Messaggregaten oder -geräten wie Mischund/oder Rührgeräte, Dispergier- oder Homogenisiergeräten, wobei eine Halterung mit einem Boden vorgesehen ist, an welchem unterseitig Aufstellfüße angeordnet sind,
- Fig. 2: eine Ansicht der Unterseite des Bodens des Laborreaktors und
- Fig. 3: einen vergrößerten Längsschnitt durch den Boden im Bereich eines Aufstellfußes gemäß der Schnittlinie D-D in Fig. 2.

Ein im Ganzen mit 1 bezeichneter Laborreaktor weist im Ausführungsbeispiel ein im Ganzen mit 2 bezeichnetes Reaktor- oder Reaktionsgefäß zur Aufnahme und Bearbeitung von Stoffen auf, die in geeigneter Weise bearbeitet und/oder gemischt werden sollen oder miteinander reagieren können, was mit in der Zeichnung nicht näher dargestellten Bearbeitungs- und/oder Messgeräten oder -aggregaten geschehen kann, die beispielsweise im Bereich der Deckel 3 in das Reaktionsgefäß 2 eingeführt werden können. Auch könnte an oder im Bereich der Deckel 3 eine nicht näher dargestellte Einrichtung zur Änderung des Drucks in dem entsprechend dicht abgeschlossenen Reaktionsgefäß 2, beispielsweise eine Pumpe oder bevorzugt eine Vakuumpumpe angeschlossen werden oder angeschlossen sein. Derartige Geräte können an einer zu der gesamten Halterung des Laborreaktors 1 gehörenden Befestigungsstange 4 beispielsweise verstellbar und/oder lösbar angebracht werden, falls solche Aggregate oder Geräte nicht von unten her in das Reaktionsgefäß oder Reaktorgefäß 2 eingreifen.

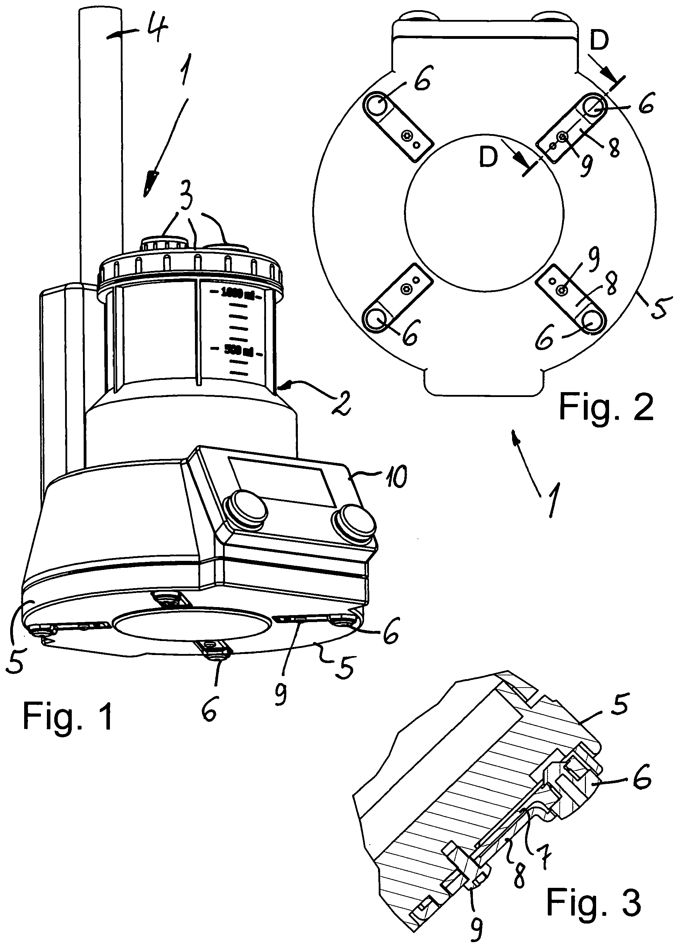

Der gesamte Laborreaktor 1 kann auf einer Aufstellfläche aufgestellt werden und hat dazu an der dieser Aufstellfläche zugewandten, vor allem in Fig. 2 dargestellten Unterseite seines Bodens 5 mehrere, im Ausführungsbeispiel gemäß Fig. 2 vier Aufstellfüße 6. Diese sind gemäß Fig. 3 in Gebrauchsstellung aufwärts oder in vertikaler Richtung gegen eine Rückstell- oder Federkraft nachgiebig oder verstellbar oder beweglich gelagert und in noch zu beschreibender Weise mit einer Wiegeeinrichtung versehen oder verbunden oder in Wirkverbindung, so dass das Gewicht des Reaktor- oder Reaktionsgefäßes 2 und seines Inhaltes festgestellt und überwacht werden kann. Außerdem kann das zu bearbeitende Gut beim Einfüllen zutreffend gewichtsmäßig dosiert werden und es können ein oder mehrere Bestandteile auch nachträglich gewichtsmäßig zutreffend hinzugefügt werden, wobei damit einhergehende Gewichtsänderungen sofort durch die Wiegeeinrichtung erfasst und überwacht werden können.

Die Aufstellfüße 6 sind dabei am Boden 5 des Laborreaktors 1 gelagert, dessen Unterseite der Aufstellfläche zugewandt ist.

Gemäß Fig. 3 ist vorgesehen, dass ein Teil der beweglichen Lagerung der Aufstellfüße 6 mit der Wiegeeinrichtung in Wirkverbindung ist, wobei die Wiegeeinrichtung selbst nicht dargestellt ist. Man erkennt dabei, dass die Aufstellfüße 6 jeweils einen als Feder ausgebildeten Hebel 7 beaufschlagen, der durch eine Vergrößerung der Gewichtskraft und damit eine stärkere Verstellung des Fußes 6 in seine Lagerung hinein ausgelenkt wird. Diese durch die Aufstellfüße 6 bewegbaren federartigen Hebel 7 können mit nicht näher dargestellten Kraftmesssensoren oder Messstreifen oder Piezoelementen versehen sein oder zusammenwirken, welche Bestandteile einer Wiegeeinrichtung sind. Somit kann die Bewegung des Fußes 6 bei zunehmendem Gewicht tiefer in den Boden 5 hinein den federnden Hebel 7 stärker verformen und dies über die genannten Sensoren auf die Wiegeeinrichtung übertragen.

Dabei ist der als Feder ausgebildete Hebel 7 unterseitig durch eine Abdeckung 8 geschützt und kann also nicht ungewollt betätigt werden. Diese Abdeckung 8 und der federnde Hebel 7 sind dabei durch eine Schrauben 9 an dem Boden 5 befestigt beziehungsweise eingespannt.

Die Kraftmesssensoren aller Aufstellfüße 6 können dabei in nicht näher dargestellter Weise mit einem Mikroprozessor oder Rechner kombiniert sein, so dass alle von den einzelnen Aufstellfüßen 6 aufgenommenen Gewichtskraft-Anteile zu einem Gesamtgewicht addiert werden können.

In Fig. 1 erkennt man an dem Laborreaktor 1 eine Bedienungseinheit 10, die außerdem auch eine Steuerungs- und/oder Speichereinheit sein kann, und lösbar mit dem Laborreaktor 1 oder einem zu diesem gehörenden Gehäuse verbunden und mit in dem Laborreaktor 1 oder dessen Gehäuse befindlichen Antriebsteilen oder Aggregaten über Funk oder über ein Kabel verbunden ist. Somit kann die Bedienungseinheit 10 auch mit Abstand zu dem eigentlichen Laborreaktor 1 benutzt werden, falls der Laborreaktor 1 in einer weniger gut zugänglichen Position zur Anwendung kommen soll.

Das oder die Rühr- und/oder Mischgeräte oder Bearbeitungsaggregate, die entweder von oben durch einen Deckel 3 oder von unten her in das Reaktorgefäß 2 eingreifen, können in nicht näher dargestellter Weise eine Drehmomentenerkennung aufweisen, die insbesondere über die Stromaufnahme des Antriebsmotors eines solchen Gerätes oder Aggregates erfolgen kann. Ferner kann an einem Rühr- und/oder Mischgerät oder Bearbeitungsaggregat ein Drehzahlregler vorgesehen sein, dessen Stellgröße zur Ermittlung des Drehmoments dienen kann.

In Fig. 1 erkennt man, dass das Reaktor- oder Reaktionsgefäß 2 abgeschlossen ist und dies erlaubt es, eine Einrichtung zur Änderung des Drucks, also eine Einrichtung zur Erzeugung eines Überdrucks oder eines Unterdrucks vorzusehen, um die Reaktionen des in dem Gefäß 2 befindlichen Gutes entsprechend beeinflussen zu können.

Der Laborreaktor 1 mit einem Reaktionsgefäß 2 zur Aufnahme von zu bearbeitenden Medien oder Stoffen weist Geräte oder Aggregate zum Bearbeiten oder Mischen von Medien oder Bestandteilen oder auch zum Messen auf, die von oben her oder auch von unten her in das Reaktions- oder Reaktorgefäß 2 eingreifen können. An der Unterseite des Bodens 5 weist der Laborreaktor 1 Aufstellfüße 6 auf, die beweglich oder nachgiebig gelagert und mit einer Wiegemesseinrichtung oder zu einer Wiegemesseinrichtung gehörenden Sensoren verbunden sind, so dass das Gewicht des zu bearbeitenden Gutes oder eine Gewichtsänderung ohne aufwendige zusätzliche Wiegevorgänge ermittelt werden können.

## Patentansprüche

1. Laborreaktor (1) mit einem abgeschlossenen Reaktionsgefäß (2) zur Aufnahme von zu bearbeitenden und/oder zu mischenden und/oder miteinander reagierenden Stoffen und mit wenigstens einem in dieses Gefäß (2) eingreifenden Misch- und/oder Rührgerät sowie mit einer das Reaktionsgefäß (2) aufnehmenden Halterung, welche eine einer Aufstellfläche zugewandte Unterseite hat, sowie einer mit dem Reaktionsgefäß verbundenen Einrichtung zur Änderung des Drucks, insbesondere mit einer Einrichtung zur Erzeugung eines Überdrucks oder eines Unterdrucks, **dadurch gekennzeichnet, dass** an der Unterseite der Halterung mehrere Aufstellfüße (6) in Gebrauchsstellung aufwärts oder in vertikaler Richtung gegen eine Rückstell- oder Federkraft nachgiebig oder verstellbar oder beweglich gelagert und **alle diese Aufstellfüße** (6) mit einer Wiegeeinrichtung versehen oder verbunden oder in Wirkverbindung sind, dass **alle** die**se** nachgiebigen oder verstellbaren oder beweglichen Aufstellfüße (6) Hebel (7) oder Wippen oder Endstücke beaufschlagen, die mit der Wiegeeinrichtung zusammenwirken oder in Wirkverbindung oder verbunden sind, und dass die durch die Aufstellfüße (6) bewegbaren Hebel (7) oder Wippen oder Endstücke mit Kraftmesssensoren oder Messstreifen oder Piezoelementen als Bestandteilen einer Wiegeeinrichtung versehen sind.

2. Laborreaktor nach Anspruch 1, **dadurch gekennzeichnet, dass** die Aufstellfüße (6) wenigstens teilweise aus federelastisch nachgiebigem Werkstoff bestehen und mit einem mit der Wiegeeinrichtung verbundenen, durch die Nachgiebigkeit des Aufstellfußes (6) bewegbaren Übertragungselement zu der Wiegeeinrichtung versehen sind.

3. Laborreaktor nach Anspruch 1 oder 2, **dadurch gekennzeichnet, dass** zwei Aufstellfüße (6) oder mehrere oder alle Aufstellfüße (6) untereinander mechanisch verbunden sind.

4. Laborreaktor nach Anspruch 3, **dadurch gekennzeichnet, dass** die Verbindung zweier Aufstellfüße (6) zwischen diesen einen Abstand zur Aufstellfläche hat oder dass wenigstens zwei Aufstellfüße (6) einstückig zu einem breiten Aufstellfuß vereinigt oder verbunden sind, der zwei Wiegeeinrichtungen aufweist oder beaufschlagt.

5. Laborreaktor nach einem der Ansprüche 1 bis 4, **dadurch gekennzeichnet, dass** die Kraftmesssensoren mehrerer oder aller Aufstellfüße (6) mit einem Mikroprozessor oder Rechner in der Weise kombiniert sind, dass die an den einzelnen Aufstellfüßen aufgenommenen Gewichtskräfte addiert und/oder gemittelt werden.

6. Laborreaktor nach einem der Ansprüche 1 bis 5, **dadurch gekennzeichnet, dass** er einen elektronischen Speicher für Rezepturen aufweist, in welchem stoffmäßig und gewichtsmäßig definierte Einzelbestandteile von Mischungen hinterlegt sind und durch die integrierte Wiegefunktion menügeführt abarbeitbar sind.

7. Laborreaktor nach einem der Ansprüche 1 bis 6, **dadurch gekennzeichnet, dass** eine Bedienungs-, Steuerungs- und/oder Speichereinheit (10) vorhanden ist, die lösbar mit dem Laborreaktor (1) oder einem Gehäuse verbunden und mit den in dem Laborreaktor (1) befindlichen Antriebsteilen und weiteren Aggregaten über Funk oder über ein Kabel verbunden ist.

8. Laborreaktor nach einem der Ansprüche 1 bis 7, **dadurch gekennzeichnet, dass** das Rühr- und/oder Mischgerät oder Bearbeitungsaggregat eine Drehmomentenerkennung aufweist, die insbesondere über die Stromaufnahme des Antriebsmotors erfolgt.

9. Laborreaktor nach Anspruch 8, **dadurch gekennzeichnet, dass** an dem Rühr- und/oder Mischgerät oder Bearbeitungsaggregat ein Drehzahlregler vorhanden ist, dessen Stellgröße zur Ermittlung des Drehmoments dient.

10. Laborreaktor nach einem der Ansprüche 1 bis 9, **dadurch gekennzeichnet, dass** die Einrichtung zur Änderung des Drucks, zur Erzeugung eines Überdrucks oder eines Unterdrucks in dem dicht abgeschlossenen Laborgefäß (2) eine an den Laborreaktor (1) oder das Reaktionsgefäß (2) anschließbare oder angeschlossene Pumpe, zum Beispiel eine Vakuumpumpe, ist.

## Claims

1. Laboratory reactor (1) having a sealed reaction vessel (2) for receiving substances to be processed and/or mixed and/or reacted with one another, and having at least one mixing and/or stirring instrument engaging in this vessel (2), and having a holder which receives the reaction vessel (2) and which has an underside facing a supporting surface, and a device, connected to the reaction vessel, for changing the pressure, in particular having a device for generating a positive pressure or a negative pressure, **characterized in that** a plurality of standing feet (6) are mounted on the underside of the holder such that, in the use position, they are flexible or adjustable or movable upwards or in a vertical direction counter to a restoring force or spring force, and all of these standing feet (6) are provided with or connected to or operatively connected to a weighing device, **in that** all of these flexible or adjustable or movable standing feet 6) act on levers (7) or rockers or end pieces that cooperate with or are operatively connected to or connected to the weighing device, and **in that** the levers (7) or rockers or end pieces that are movable by the standing feet (6) are provided with force measuring sensors or measuring strips or piezoelectric elements as constituents of a weighing device.

2. Laboratory reactor according to Claim 1, **characterized in that** the standing feet (6) consist at least partially of spring-elastically flexible material and are provided with a transmission element, connected to the weighing device and movable by the flexibility of the standing foot (6), for transmitting to the weighing device.

3. Laboratory reactor according to Claim 1 or 2, **characterized in that** two standing feet (6) or a plurality of or all standing feet (6) are mechanically connected to one another.

4. Laboratory reactor according to Claim 3, **characterized in that** the connection of two standing feet (6) has, between the latter, a spacing from the supporting surface, or **in that** at least two standing feet (6) are connected or combined integrally to form a wide standing foot, which has or acts on two weighing devices.

5. Laboratory reactor according to one of Claims 1 to 4, **characterized in that** the force measuring sensors of a plurality of or all standing feet (6) are combined with a microprocessor or computer in such a way that the weight forces absorbed at the individual standing feet are added together and/or averaged.

6. Laboratory reactor according to one of Claims 1 to 5, **characterized in that** it has an electronic memory for formulations, in which individual constituents, defined in terms of substance and weight, of mixtures are stored and able to be processed in a menu-driven manner by the integrated weighing function.

7. Laboratory reactor according to one of Claims 1 to 6, **characterized in that** an operating, control and/or memory unit (10) is provided, which is releasably connected to the laboratory reactor (1) or a housing and is connected wirelessly or via a cable to the drive parts and other assemblies located in the laboratory reactor (1).

8. Laboratory reactor according to one of Claims 1 to 7, **characterized in that** the stirring and/or mixing instrument or processing assembly exhibits torque detection, which takes place in particular via the power consumption of the drive motor.

9. Laboratory reactor according to Claim 8, **characterized in that** a speed regulator is provided on the stirring and/or mixing instrument or processing assembly, the manipulated variable of said speed regulator being used to determine the torque.

10. Laboratory reactor according to one of Claims 1 to 9, **characterized in that** the device for changing the pressure, for generating a positive pressure or a negative pressure in the hermetically sealed laboratory vessel (2) is a pump, for example a vacuum pump, that is connected or able to be connected to the laboratory reactor (1) or the reaction vessel (2).

## Revendications

1. Réacteur de laboratoire (1) comportant une cuve de réaction fermée (2) destinée à contenir des substances à traiter et/ou à mélanger et/ou à faire réagir l'une avec l'autre et au moins un appareil de mélange et/ou d'agitation engagé dans cette cuve (2) ainsi qu'un support portant la cuve de réaction (2), qui présente un côté inférieur tourné vers une surface de dépôt, ainsi qu'un dispositif pour changer la pression relié à la cuve de réaction, en particulier un dispositif pour produire une surpression ou une dépression, **caractérisé en ce que** plusieurs pieds de soutien (6) sont montés sur le côté inférieur du support en position d'utilisation de façon souple ou réglable ou mobile vers le haut ou en direction verticale contre une force de rappel ou une force de ressort et tous ces pieds de soutien (6) sont munis ou reliés ou en liaison active avec un dispositif de pesée, **en ce que** tous ces pieds de soutien (6) souples ou réglables ou mobiles agissent sur des leviers (7) ou des bascules ou des pièces d'extrémité qui coopèrent ou sont en liaison active ou sont reliés/reliées au dispositif de pesée, et **en ce que** les leviers (7) ou les bascules ou les pièces d'extrémité déplaçables par les pieds de soutien (6) sont munis/munies de capteurs de mesure de force ou de jauges extensométriques ou d'éléments piézoélectriques comme composants d'un dispositif de pesée.

2. Réacteur de laboratoire selon la revendication 1, **caractérisé en ce que** les pieds de soutien (6) sont composés au moins en partie de matériau souple élastique et sont munis d'un élément de transmission vers le dispositif de pesée, relié au dispositif de pesée et déplaçable par la souplesse du pied de soutien (6).

3. Réacteur de laboratoire selon une revendication 1 ou 2, **caractérisé en ce que** deux pieds de soutien (6) ou plusieurs ou tous les pieds de soutien (6) sont mécaniquement reliés les uns aux autres.

4. Réacteur de laboratoire selon la revendication 3, **caractérisé en ce que** la liaison de deux pieds de soutien (6) présente entre ceux-ci une distance à la surface de dépôt ou **en ce qu'**au moins deux pieds de soutien (6) sont réunis ou reliés d'un seul tenant en un pied de soutien large, qui présente ou agit sur deux dispositifs de pesée.

5. Réacteur de laboratoire selon l'une quelconque des revendications 1 à 4, **caractérisé en ce que** les capteurs de mesure de force de plusieurs ou de tous les pieds de soutien (6) sont combinés à un microprocesseur ou à un ordinateur, de telle manière que les forces pondérales enregistrées aux pieds de soutien individuels soient additionnées et/ou calculées en valeur moyenne.

6. Réacteur de laboratoire selon l'une quelconque des revendications 1 à 5, **caractérisé en ce qu'**il présente une mémoire électronique pour des recettes, dans laquelle des composants individuels définis en matière et en poids pour des mélanges sont stockés et peuvent être traités par la fonction de pesée intégrée sous la conduite d'un menu.

7. Réacteur de laboratoire selon l'une quelconque des revendications 1 à 6, **caractérisé en ce qu'**il se trouve une unité de conduite, de commande et/ou de mémoire (10), qui est reliée de façon détachable au réacteur de laboratoire (1) ou à un boîtier et qui est reliée par radio ou par un câble aux parties d'entraînement et à d'autres groupes se trouvant dans le réacteur de laboratoire (1).

8. Réacteur de laboratoire selon l'une quelconque des revendications 1 à 7, **caractérisé en ce que** l'appareil d'agitation et/ou de mélange ou l'ensemble de traitement présente une reconnaissance de couple, qui est effectuée notamment par la consommation de courant du moteur d'entraînement.

9. Réacteur de laboratoire selon la revendication 8, **caractérisé en ce qu'**il se trouve sur l'appareil d'agitation et/ou de mélange ou sur l'ensemble de traitement un régulateur de vitesse de rotation, dont la grandeur de réglage sert pour la détermination du couple.

10. Réacteur de laboratoire selon l'une quelconque des revendications 1 à 9, **caractérisé en ce que** le dispositif pour changer la pression, pour produire une surpression ou une dépression dans la cuve de laboratoire (2) hermétiquement fermée est une pompe pouvant être ou étant raccordée au réacteur de laboratoire (1) ou à la cuve de réaction (2), par exemple une pompe à vide.
